# DEMANDE DE BREVET EUROPEEN

(11) **EP 3 501 324 A1**
(43) Date de publication de la demande: **26.06.2019**
(21) Numéro de dépôt: 17209656.2
(22) Date de dépôt: 21.12.2017
(51) Int. Cl.: A44C 5/00, A44C 15/00, A44C 27/00, B82Y 30/00, C09K 9/00, C07F 15/02

(54) **ÉLÉMENT D'HABILLAGE POUR PIÈCE D'HORLOGERIE OU DE BIJOUTERIE**

(71) Demandeur: The Swatch Group Research and Development Ltd, 2074 Marin (CH)
(72) Inventeur: François, Nicolas, 2000 Neuchâtel (CH); Rannoux, Claire, 1110 Morges (CH); Bourban, Stewes, 1589 Chabrey (CH)
(74) Mandataire: ICB SA

(57) **Abrégé**

Elément d'habillage pour pièce d'horlogerie ou de bijouterie, cet élément d'habillage (2) étant réalisé au moyen d'une matrice polymère dans laquelle sont dispersées des molécules piézochromiques (1, 4) qui passent d'un premier état stable à un second état stable en changeant de couleur sous l'effet de l'application d'une pression.

## Description

### Domaine technique de l'invention

La présente invention concerne un élément d'habillage pour pièce d'horlogerie ou de bijouterie. La présente invention concerne notamment et non limitativement un bracelet destiné à être fixé à un membre d'un utilisateur. Ce bracelet peut être attaché seul au membre de l'utilisateur ou bien être utilisé pour attacher au membre de l'utilisateur un objet portable comme une boîte de montre.

### Arrière-plan technologique de l'invention

De nombreux bracelets sont disponibles sur le marché. Il peut s'agir de bracelets utilisés seuls à la façon de parures, ou bien de bracelets qui sont fixés à un objet portable comme une boîte de montre pour permettre à un tel objet portable d'être par exemple attaché au poignet d'un utilisateur.

Ces bracelets sont rigides ou extensibles. De manière non-limitative, ces bracelets peuvent être réalisés en cuir, en élastomère, en tissu ou bien encore en acier ou en céramique. Ces bracelets peuvent être formés d'une pluralité de maillons articulés les uns aux autres, ou bien être réalisés à l'aide de mailles ou d'une bande par exemple de tissu. Les systèmes de fermeture de ces bracelets sont également très divers. A titre d'exemple seulement, on peut citer les fermoirs à boucle et ardillon ou bien encore les fermoirs à lames déployantes.

Divers par leurs structures mécaniques et par les matériaux dans lesquels ils sont réalisés, les bracelets diffèrent également les uns des autres par leurs couleurs et par les motifs décoratifs dont ils peuvent être agrémentés. Néanmoins, l'aspect de ces bracelets ne peut plus être modifié une fois sorti d'usine, de sorte que tous les acheteurs qui se sont porté acquéreurs par exemple d'un modèle donné de montre possèdent un bracelet identique.

Pour remédier à cet inconvénient, il a déjà été proposé, en particulier dans le domaine de l'horlogerie, de commercialiser certains modèles de montres en compagnie d'un lot de bracelets interchangeables. Ainsi, en fonction de son humeur, l'utilisateur peut remplacer un bracelet par un autre. Cette solution a pour mérite de permettre, jusqu'à un certain degré, à l'utilisateur de personnaliser sa montre-bracelet. Néanmoins, le degré de liberté dont jouit l'utilisateur pour personnaliser par exemple le bracelet de sa montre est tout de même limité aux bracelets de rechange qui lui sont fournis.

### Résumé de l'invention

La présente invention a pour but de remédier aux problèmes mentionnés ci-dessus ainsi qu'à d'autres encore en proposant un élément d'habillage pour pièce d'horlogerie ou de bijouterie, notamment mais non limitativement un bracelet utilisable seul à la manière d'une parure ou bien pour attacher un objet portable tel qu'une boîte de montre à un membre d'un utilisateur, qui soit de qualité supérieure et qui permette à son utilisateur de personnaliser son bracelet à volonté. En particulier, l'invention a pour but de fournir aux acheteurs un élément d'habillage que les utilisateurs puissent personnaliser sans autre limite que celle de leur imagination.

A cet effet, la présente invention concerne un élément d'habillage pour pièce d'horlogerie ou de bijouterie, cet élément d'habillage étant réalisé au moyen d'une matrice polymère dans laquelle sont dispersées des molécules piézochromiques qui passent d'un premier état stable à un second état stable en changeant de couleur sous l'effet de l'application d'une pression.

Grâce à ces caractéristiques, la présente invention procure un élément d'habillage pour pièce d'horlogerie ou de bijouterie, notamment mais non exclusivement un bracelet utilisé à la façon d'une parure ou pour attacher un objet portable, par exemple une montre-bracelet, à un poignet d'un utilisateur, cet élément d'habillage ayant la faculté de changer de couleur sous l'effet de l'application d'une force de pression mécanique. L'aspect du bracelet peut donc être modifié et personnalisé en usine, ou bien par l'utilisateur lui-même.

Selon un mode de réalisation de l'invention, les molécules piézochromiques sont synthétisées de façon à changer d'état sous l'effet de l'application d'une pression supérieure ou égale à 5 kg.cm². Ainsi, les petits chocs de la vie quotidienne qui correspondent à des pressions inférieures à ce seuil ne vont pas induire une transition colorée des molécules piézochromiques. Par contre, cette valeur seuil est suffisamment faible pour qu'un utilisateur puisse faire transiter les molécules piézochromiques de leur premier état à leur second état sans devoir recourir à un outillage complexe.

Selon un autre mode de réalisation de l'invention, les molécules piézochromiques sont dispersées dans la matrice dans une proportion comprise entre 2% et 20% en poids selon l'effet de transition coloré recherché.

Selon un autre mode de réalisation de l'invention, le composé piézochromique est un matériau nanométrique à effet de transition de spin. Comparés à d'autres matériaux piézochromiques, les nanomatériaux piézochromiques subissent des phénomènes de contraction volumique et de transition électronique à faible pression (de l'ordre de quelques bars), ce qui facilite le changement de couleur.

Dans un cas avantageux, le composé piézochromique est un nanomatériau à effet de transition de spin par pression sur lequel on induit un changement de couleur irréversible.

Dans un autre cas avantageux, le composé piézochromique est un nanomatériau à effet de transition de spin par pression sur lequel on induit un changement de couleur réversible selon une hystérèse.

Dans le cas où le composé piézochromique présente un changement de couleur réversible, il est possible de le faire revenir à son état initial par application de chaleur.

Selon encore un autre mode de réalisation de l'invention, la matrice est formée par une résine polymère organique ou inorganique.

Dans un cas avantageux, la matrice est formée par une résine élastomère dont la dureté est comprise entre 50 shore A et 90 shore D.

Dans un autre cas avantageux, la matrice est formée par une résine élastomère thermoplastique.

Dans un autre cas avantageux, la résine élastomère thermoplastique est choisie dans le groupe formé par les thermoplastiques polyuréthanes, les thermoplastiques élastomères styrènes, les copolyesters thermoplastiques et les et les copolyamides thermoplastiques.

Dans un cas avantageux, la matrice est formée par un élastomère vulcanisable choisi dans le groupe formé par les silicones et les caoutchoucs éthylène-propylène fluorés (EPDM), les caoutchoucs polymériques en butadiène et nitrile-acrylique (NBR), les caoutchoucs nitrile hydrogénés (HNBR) et les caoutchoucs fluorocarbones (FKM).

Selon un mode de réalisation de l'invention, la matrice polymérique est pré-mélangée avec au moins un additif coloré permettant de combiner la couleur initiale de la matrice avec l'effet piézochromique.

Dans un cas avantageux, l'additif coloré est choisi dans le groupe formé par les colorants translucides, fluorescents et/ou phosphorescents ainsi que par les pigments à effet métallique ou nacré.

### Brève description des figures

D'autres caractéristiques et avantages de la présente invention ressortiront plus clairement de la description détaillée qui suit d'un exemple d'un élément d'habillage selon l'invention, cet exemple étant donné à titre purement illustratif et non limitatif seulement en liaison avec le dessin annexé sur lequel :
- les figures 1A à 1C illustrent le comportement d'une molécule piézochromique qui passe de manière irréversible d'un premier état stable dans lequel elle a une première couleur à un second état stable dans lequel elle a une seconde couleur sous l'effet d'une pression mécanique ;
- les figures 2A à 2C illustrent le comportement à hystérèse d'une molécule piézochromique qui passe de manière réversible d'un premier état stable dans lequel elle a une première couleur à un second état stable dans lequel elle a une seconde couleur sous l'effet d'une pression mécanique, et qui peut revenir à son état stable initial par application de chaleur ;
- la figure 3 illustre la personnalisation de l'élément d'habillage par pression mécanique au moyen d'un stylet, et
- la figure 4 illustre la personnalisation de l'élément d'habillage selon l'invention par application d'une pression mécanique au moyen d'un poinçon de forme.

### Description détaillée d'un mode de réalisation de l'invention

La présente invention procède de l'idée générale inventive qui consiste à réaliser un élément d'habillage pour pièce d'horlogerie ou de bijouterie, en particulier mais non limitativement un bracelet, au moyen d'une matrice polymérique dans laquelle sont dispersées des molécules piézochromiques qui ont la faculté de changer de couleur sous l'effet d'une pression mécanique appliquée. L'apparence du bracelet peut donc être modifiée en usine ou par l'utilisateur lui-même, par pression à l'aide d'un doigt ou à l'aide d'un outil par exemple du genre stylet. En effet, la sensibilité à la pression des molécules piézochromiques peut être ajustée au moment de leur synthèse de façon que cette sensibilité soit suffisamment élevée pour que l'élément d'habillage ne change pas d'aspect au moindre choc de la vie courante, mais néanmoins suffisamment basse pour que les forces à mettre en jeu pour induire un tel changement d'aspect soient compatibles avec celles de l'utilisateur. Selon le type de molécules piézochromiques utilisé, le changement de couleur peut être irréversible ou bien présenter une hystérèse lui permettant de revenir à son état initial par exemple par application de chaleur. L'utilisateur peut ainsi modifier et personnaliser l'élément d'habillage selon l'invention au gré de ses envies et posséder ainsi un élément d'habillage dont l'aspect est unique. Cette personnalisation peut se faire à l'aide des doigts, d'un stylet ou autre objet de forme convexe, ou bien encore au moyen d'un poinçon fourni par le fabriquant qui peut être appliqué librement par l'utilisateur ou selon un schéma proposé par le fabriquant. Le degré de liberté dont jouit l'utilisateur pour personnaliser l'élément d'habillage est donc total ; l'utilisateur peut apposer sur son élément d'habillage un décor, un logo, une marque, voire même sa signature qui peut être retranscrite soit au moyen d'un stylet, soit au moyen d'un poinçon de forme qui peut lui être fourni par le fabricant de l'élément d'habillage. L'invention est également intéressante pour les fabricants qui peuvent ne produire qu'un seul type, ou bien un nombre limité de types différents d'éléments d'habillage, et laisser le soin à l'utilisateur d'effectuer la décoration finale.

Les composés piézochromiques sont de préférence des nanomatériaux à effet de transition de spin tels que, par exemple, ceux décrits dans la demande internationale WO 2007/065996 A1. Ces composés piézochromiques ont la propriété de changer de couleur lorsqu'une pression mécanique leur est appliquée. On explique habituellement ce changement de couleur par un changement de conformation spatiale des molécules piézochromiques qui passent d'un état relaxé à un état compressé. Le pigment piézochromique utilisé peut aussi être basé sur 10bis ((E)-2-(pyrid-2-yl(vinyl(anthracene) (BP2VA) connu pour des transitions de couleur verte (λ = 528 nm) à orange/rouge (λ = 590 nm), ou bien basé sur 11-(3'-Oxodihydrobenzothiophen-2'-ylidene)cyclopental[1,2-b :4,3-b'] dibenzothiophene connu pour des transitions rouges (λ = 600 nm) à noires (λ = 750 nm).

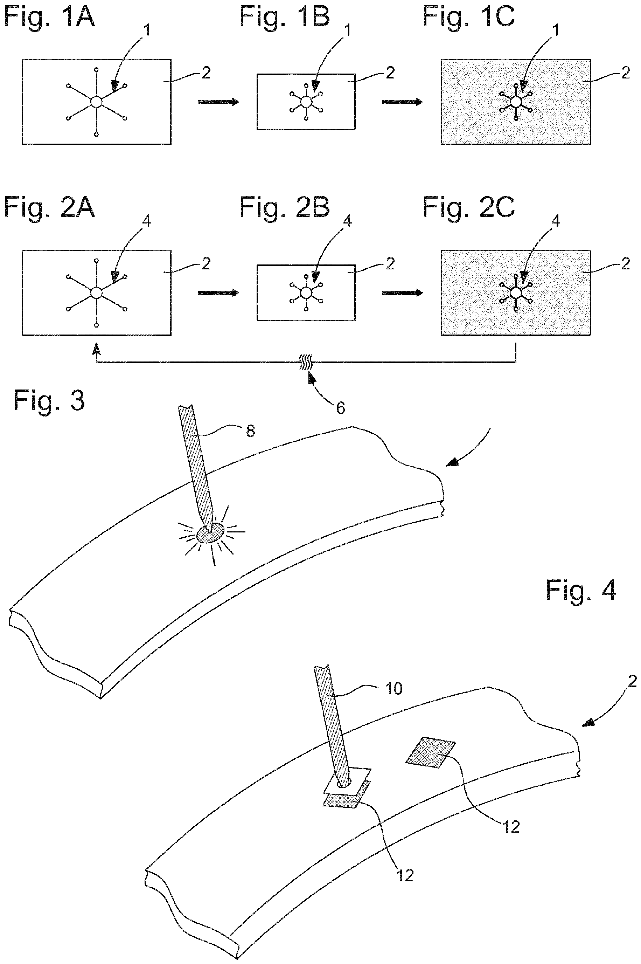

Les figures 1A à 1C illustrent le comportement, sous l'effet de l'application d'une pression mécanique, d'une molécule piézochromique 1 noyée dans une matrice polymère qui forme un élément d'habillage 2 pour une pièce d'horlogerie ou de bijouterie, notamment mais non exclusivement un bracelet. A la figure 1A, la molécule piézochromique 1 est dans son état initial stable relaxé. A la figure 1B, on exerce une pression mécanique sur l'élément d'habillage 2 qui se comprime, ce qui entraîne une compression correspondante de la molécule piézochromique 1. A la figure 1C, on a relâché la pression mécanique sur l'élément d'habillage 2 et celui-ci a retrouvé sa forme initiale. Par contre, la molécule piézochromique 1 est passée de manière irréversible de son premier état stable dans lequel elle est relaxée et a une première couleur à un second état stable dans lequel elle est comprimée et a une seconde couleur.

Les figures 2A à 2C illustrent le comportement à hystérèse d'une molécule piézochromique 4 qui, sous l'effet de l'application d'une pression mécanique (figure 2B), passe de manière réversible d'un premier état stable dans lequel elle est relaxée et a une première couleur (figure 2A), à un second état stable dans lequel elle est comprimée et a une seconde couleur (figure 2C). En 6 à la figure 2C, on voit que sous l'effet d'une application de chaleur, la molécule piézochromique 4 revient à son état initial relaxé.

La figure 3 illustre la personnalisation de l'élément d'habillage 2 par pression mécanique au moyen d'un outil tel qu'un stylet 8. En pressant localement sur l'élément d'habillage 2 au moyen du stylet 8, on comprime la matrice et les molécules piézochromiques noyées dans cette matrice. Sous l'effet de cette compression, les molécules piézochromiques passent, de manière réversible ou irréversible, de leur état initial stable relaxé à leur état final comprimé en changeant de couleur. Il est ainsi possible, en changeant par endroits la couleur de l'élément d'habillage, de créer sur cet élément d'habillage un décor unique qui n'aura pas de correspondant chez un autre utilisateur.

A titre de variante, sur la figure 4 on illustre la personnalisation d'un élément d'habillage 2 selon l'invention au moyen d'un poinçon de forme 10 qui porte un motif élémentaire et qui peut être fourni par le fabricant de l'élément d'habillage 2. Selon le nombre de fois où le motif élémentaire 12 du poinçon de forme 10 va être reproduit sur l'élément d'habillage 2 et la façon dont ces motifs élémentaires vont être disposés les uns par rapport aux autres, il est possible de créer un décor original qui n'aura pas de correspondant chez aucun autre utilisateur.

Il va de soi que la présente invention n'est pas limitée au mode de réalisation qui vient d'être décrit et que diverses modifications et variantes simples peuvent être envisagées par l'homme du métier sans sortir du cadre de l'invention tel que défini par les revendications annexées. On comprendra en particulier que, bien que l'invention ait été décrite en liaison avec un bracelet porté comme une parure de bijouterie ou utilisé pour fixer un objet portable, notamment une boîte de montre, à un poignet d'un utilisateur, l'invention concerne tout autre type d'élément d'habillage pour pièce d'horlogerie ou de bijouterie tel que, en particulier, une lunette ou une carrure de boîte de montre, une bague, un fermoir ou autre.

### Nomenclature

1. Molécule piézochromique
2. Elément d'habillage
4. Molécule piézochromique
6. Application de chaleur
8. Stylet
10. Poinçon de forme
12. Motif élémentaire

## Revendications

1. Elément d'habillage pour pièce d'horlogerie ou de bijouterie, cet élément d'habillage (2) étant réalisé au moyen d'une matrice polymère dans laquelle sont dispersées des molécules piézochromiques (1, 4) qui passent d'un premier état stable à un second état stable en changeant de couleur sous l'effet de l'application d'une pression.

2. Elément d'habillage selon la revendication 1, **caractérisé en ce que** les molécules piézochromiques sont synthétisées de façon à changer d'état sous l'effet de l'application d'une pression supérieure ou égale à 5 kg.cm².

3. Elément d'habillage selon l'une des revendications 1 et 2, **caractérisé en ce que** les molécules piézochromiques sont dispersées dans la matrice dans une proportion comprise entre 2% et 20% en poids selon l'effet de transition coloré recherché.

4. Elément d'habillage selon l'une des revendications 1 à 3, **caractérisé en ce que** le composé piézochromique est un matériau nanométrique à effet de transition de spin.

5. Elément d'habillage selon la revendication 4, **caractérisé en ce que** le composé piézochromique est un nanomatériau à effet de transition de spin par pression sur lequel on induit un changement de couleur irréversible.

6. Elément d'habillage selon la revendication 4, **caractérisé en ce que** le composé piézochromique est un nanomatériau à effet de transition de spin par pression sur lequel on induit un changement de couleur réversible selon une hystérèse.

7. Elément d'habillage selon la revendication 6, **caractérisé en ce que** le composé piézochromique revient à son état initial par application de chaleur.

8. Elément d'habillage selon l'une des revendications 1 à 7, **caractérisé en ce que** la matrice est formée par une résine polymère organique ou inorganique.

9. Elément d'habillage selon la revendication 8, **caractérisé en ce que** la matrice est formée par une résine élastomère dont la dureté est comprise entre 50 shore A et 90 shore D.

10. Elément d'habillage selon l'une des revendications 8 et 9, **caractérisé en ce que** la matrice est formée par une résine élastomère thermoplastique.

11. Elément d'habillage selon la revendication 10, **caractérisé en ce que** la résine élastomère thermoplastique est choisie dans le groupe formé par les thermoplastiques polyuréthanes, les thermoplastiques élastomères styrènes, les copolyesters thermoplastiques et les et les copolyamides thermoplastiques.

12. Elément d'habillage selon l'une des revendications 8 et 9, **caractérisé en ce que** la matrice est formée par un élastomère vulcanisable choisi dans le groupe formé par les silicones et les caoutchoucs éthylène-propylène fluorés (EPDM), les caoutchoucs polymériques en butadiène et nitrile-acrylique (NBR), les caoutchoucs nitrile hydrogénés (HNBR) et les caoutchoucs fluorocarbones (FKM).

13. Elément d'habillage selon l'une des revendications 1 à 12, **caractérisé en ce que** la matrice polymérique est pré-mélangée avec au moins un additif coloré permettant de combiner la couleur initiale de la matrice avec l'effet piézochromique.

14. Elément d'habillage selon la revendication 13, **caractérisé en ce que** l'additif coloré est choisi dans le groupe formé par les colorants translucides, fluorescents et/ou phosphorescents ainsi que par les pigments à effet métallique ou nacré.
